# EUROPÄISCHE PATENTSCHRIFT

(11) **EP 1 276 598 B1**
(45) Veröffentlichungstag und Bekanntmachung des Hinweises auf die Patenterteilung: **24.08.2005**
(21) Anmeldenummer: 01925411.9
(22) Anmeldetag: 09.03.2001
(51) Int. Cl.: B29C 33/20, B29C 49/56

(54) **BLASFORM UND BLASMASCHINE**
BLOW MOULD AND BLOW-MOULDING MACHINE
MOULE ET MACHINE DE SOUFFLAGE

(30) Priorität: 22.04.2000 DE 20007429 U
(43) Veröffentlichungstag der Anmeldung: 22.01.2003
(73) Patentinhaber: KRONES AG, 93068 Neutraubling (DE)
(72) Erfinder: ALBRECHT, Thomas, 92339 Beilngries (DE)
(86) Internationale Anmeldenummer: PCT/EP2001/002669
(87) Internationale Veröffentlichungsnummer: WO 2001/081060

(56) Entgegenhaltungen:
- US-A- 3 825 396
- US-A- 4 737 093
- US-A- 5 114 335
- US-A- 5 375 991
- US-A- 5 641 451

## Beschreibung

Die Erfindung betrifft eine Blasform mit zwei um eine Verbindungsachse schwenkbaren Formhälften für eine Streckblasmaschine oder dergl., die mindestens ein an einer ersten Formhälfte angebrachtes Verriegelungselement und mindestens ein an einer zweiten Formhälfte angebrachtes Gegenelement umfasst. Weiterhin betrifft die Erfindung eine Blasmaschine insbesondere zum Streckblasen von Vorformlingen, die mindestens eine solche Blasform umfasst.

Eine solche Blasform und eine solche Blasmaschine sind aus FR-PS 2 646 802 bekannt.

Zum Streckblasen von Vorformlingen für Kunststoffflaschen werden dabei Blasformen verwendet, in die ein Vorformling mit Überdruck im Innern der Blasform formgeblasen, d.h., auskonturiert wird. Die Blasform kann dabei z.B. zwei Formhälften umfassen, die um eine gemeinsame Achse drehbar gelagert sind. Durch Drehen um diese Achse können die Formhälften verschlossen werden, so dass sich im Innern der durch die beiden Formhälften begrenzten Blasform ein Hohlraum bildet, in dem ein Vorformling formgeblasen werden kann.

Da beim Streckblasen relativ hohe Drücke von beispielsweise 40 bar verwendet werden, ist es notwendig, dass die beiden schwenkbar angebrachten Formhälften in ihrem verschlossenen Zustand verriegelt werden, damit sie den starken inneren Drücken standhalten können.

Gemäß der FR-PS 2 646 802 ist dabei an einem seitlichen Ende einer der Formhälften ein Vorsprung mit einer Durchführungsöffnung vorgesehen und an der im geschlossenen zustand unmittelbar gegenüberliegenden seitlichen Fläche der zweiten Formhälfte ein vertikal versetzter weiterer Vorsprung angebracht, der einen vertikal abstehenden Stift aufnimmt, der durch die Öffnung in dem vorsprung der ersten Formhälfte ein- bzw. aussteckbar ist. Die Verriegelung der Formhälften in der Blasmaschine wird dabei in der Art einer Anhängerkupplung durch eine Hubbewegung mehrerer an einer gemeinsamen Betätigungsstange befestigter Stifte erreicht.

Diese Lösung ist allerdings mechanisch aufwendig, da neben einer horizontalen Bewegung, d.h. z.B. einem horizontalen Drehen der beiden Formhälften zum Öffnung und Schließen, weiterhin noch eine vertikale Bewegung der Betätigungsstange mit den Stiften notwendig ist, um durch ein Eingreifen der vertikal abstehenden Stifte der einen Formhälfte in die in der anderen Formhälfte vorgesehene Öffnungen die verriegelung der beiden Blasformhälften zu erreichen.

Alternativ schlägt das US-Patent US 3 601 858 vor, ein ankerförmiges Verriegelungselement an einer der Formhälften vorzusehen, das an seinem der anderen Formhälfte zuweisenden Ende nach oben bzw. unten vorspringende Bereiche hat. Weiterhin sind an der anderen Formhälfte zwei Verriegelungshaken vorgesehen, die mit Schwenkarmen beaufschlagt sind und durch diese Schwenkarme so gedreht werden können, dass sie in einer verriegelungsposition die vorspringenden Bereiche des an der anderen Formhälfte angebrachten Ankerelementes umgreifen, so dass dieses in seiner Position festgesetzt wird. Durch das Schwenken der Verriegelungshaken um ihre Schwenkarme kann der Kontakt der Haken mit dem Verriegelungsanker der anderen Formhälfte wieder gelöst und somit die beiden Formhälften geöffnet werden.

Allerdings ist auch diese Struktur, die das Bereitstellen von hakenförmigen Elementen mit zugehörigen Schwenkarmen umfasst, die in Bezug zueinander entfernt werden, mechanisch nur relativ aufwendig zu verwirklichen.

Schließlich ist bereits eine Spritzform für Spritzgussmaschinen mit horizontal angeordneten Formhälften bekannt, wovon die untere stationär und die obere höhenbeweglich ist (US 5 375 991). Die obere Formhälfte weist am Umfang mehrere mit Ausnehmungen versehene senkrechte Bolzen auf, die mit in der unteren Formhälfte um horizontale Achsen drehbaren Wellen korrespondieren. Je nach Lage der mit einer Ausnehmung versehenen Wellen geben diese die Bolzen frei oder greifen in deren Ausnehmungen ein, wodurch die Spritzform verriegelt wird.

Davon ausgehend ist es die Aufgabe der vorliegenden Erfindung, eine Blasform mit den Merkmalen des Oberbegriffs des Anspruchs 1 und eine zugehörige Blasmaschine mit einer solchen Blasform bereitzustellen, die eine konstruktiv einfache Verriegelung der Formhälften ermöglicht.

Diese Aufgabe wird gelöst durch die Blasform nach Anspruch 1 und die Blasmaschine nach Anspruch 11. Bevorzugte Ausführungsformen sind Gegenstand von Unteransprüchen.

Die erfindungsgemäße Lösung sieht vor, dass das Gegenelement der zweiten Formhälfte eine parallel zur Verbindungsachse angeordnete Welle ist, die durch Drehung um eine durch die Welle verlaufende Längsachse zwischen einer verriegelungsposition, in der die Blasform verriegelt ist, und einer Entriegelungsposition drehbar ist, in der die Blasform geöffnet werden kann und die Welle eine solche Außenkontur hat, dass die welle in der Verrieglungsposition zumindest teilweise an dem Verriegelungselement anliegt und in der Entriegelungsposition das Verriegelungselement freigibt.

Diese Ausgestaltung der Blasform hat den Vorteil, dass auf konstruktiv einfachere Weise die Verriegelung verwirklicht werden kann. Eine kompliziertere Mechanik, wie sie ansonsten üblich war, entfällt somit. D.h., es ist weder die nach der französischen Druckschrift FR-PS 2 646 802 bekannte Lösung der Verwendung von einer Verrieglung in der Art einer Anhängerkupplung mit einer in zwei vertikalen Ebenen notwendigen Bewegung der Verriegelungsbestandteile notwendig, noch die mechanisch aufwendige Lösung nach dem US-Patent 3 601 858 mit der Verwendung von Haken, die durch schwenkbar auszugestaltende Arme beaufschlagt und gedreht werden.

Im Vergleich dazu ist die erfindungsgemäße Verwendung einer Welle, die zum Verriegeln bzw. Entriegeln lediglich um ihre Längsachse gedreht werden muss, mechanisch einfacher zu gestalten und damit weniger fehleranfällig und wartungsintensiv. Außerdem ergeben sich sehr kurze Schaltzeiten.

Vorteilhafterweise hat die Welle mindestens eine Aussparung am Umfangsbereich, an der das Verriegelungselement zum Öffnen der Blasform zumindest teilweise vorbeibewegbar ist. Bei passender Ausgestaltung des Verriegelungselementes ist es somit möglich, beim Zusammenfügen der beiden Formhälften das Verriegelungselement an der Welle vorbeizuschieben, wenn die Aussparung auf das sich vorbeibewegende Verriegelungselement gerichtet ist, so dass die Formhälften geschlossen werden können.

Durch Drehen der Welle um ihre Längsachse kann anschließend der Bereich der Aussparung von dem Verriegelungselement weggedreht werden und sich dann ein Bereich des Umfangs der Außenkontur der Welle, der keine Aussparung hat, an das Verriegelungselement so anlegen, dass dieses nicht zurückgeschoben werden kann. Dies ermöglicht, dass die beiden Formhälften verschlossen und verriegelt sind.

Somit ist bei dieser Ausführungsform lediglich das Anbringen einer Aussparung in einer Welle notwendig, um das Verriegeln bzw. Entriegeln zu ermöglichen. Dies ist konstruktiv einfacher als eine in zwei Ebenen bewegbare Mechanik oder Haken, die durch Schwenkarme beaufschlagt werden, zur Verfügung zu stellen, wie es bei den bekannten Lösungen notwendig war.

In einer bevorzugten Ausführungsform sind an der zweiten Formhälfte zwei Wellen als Gegenelemente angebracht, die jeweils um eine durch sie verlaufende Längsachse zwischen der Verriegelungs- und der Entriegelungsposition drehbar sind. Indem nicht nur eine Welle, sondern zwei Wellen als Gegenelement vorhanden sind, kann die Sicherungs-, d.h. die Verriegelungsfunktion mechanisch stabiler verwirklicht werden, da nicht nur eine, sondern die beiden Wellen zur Verrieglung an unterschiedlichen Bereichen des Verriegelungselementes anliegen und dieses somit stabiler zur Verrieglung halten können.

Bevorzugt sind dabei die beiden Gegenelemente so beabstandet voneinander angebracht, dass in der Entriegelungsposition das verriegelungselement zwischen den beiden Wellen zumindest teilweise hindurchgeführt werden kann und in der Verriegelungsposition die Konturen der beiden Wellen zumindest teilweise so an dem Verriegelungselement anliegen, dass die Blasform fest verriegelt ist.

Es sei angenommen, dass die beiden Wellen jeweils auf gleicher Höhe Aussparungen haben. Wenn die beiden voneinander beabstandeten Wellen dabei so gedreht werden, dass die beiden Aussparungen aufeinander zuweisen, so wird ein vergrößerter Zwischenraum zwischen den beiden Wellen auf der Höhe der Aussparungen verwirklicht werden. In diesem Fall, der der Entriegelungsposition entspricht, kann dann ein Verriegelungselement durch den Bereich der beiden Aussparungen der Wellen hindurchgeschoben werden, bis die beiden Formhälften geschlossen sind.

Zum Verriegeln kann durch Drehen der beiden Wellen der Bereich der Aussparung jeweils so weit nach außen gedreht werden, dass sie sich nicht mehr entgegenweisen und der Durchgang zwischen den beiden Wellen verengt wird. Wenn dabei das Verriegelungselement so ausgestaltet ist, dass es nun zumindest teilweise an der Kontur der beiden Wellen anliegt und ein in der Breite vergrößerter Bereich, der durch die beiden Aussparungen in der Entriegelungsposition hindurchgeführt wurde, nun nicht mehr zwischen den beiden Wellen zurückgeschoben werden kann, so ist eine Verriegelung der beiden Formhälften realisierbar.

Im Falle des Vorhandenseins von zwei Wellen als Gegenelemente ist das Verriegelungselement bevorzugt im Wesentlichen T-förmig gestaltet. Dies bedeutet, dass das Verriegelungselement einen Bereich haben muss, der so verbreitert ist, dass er beispielsweise in der Entriegelungsposition durch die beiden Aussparungen vorbeigeschoben werden kann, um die Formhälften zu schließen. Der verbreiterte Bereich muss dabei gleichzeitig so breit sein, dass er nicht wieder durch die beiden Wellen zurückgeschoben werden kann, wenn diese Wellen in die Verriegelungsposition gedreht werden. Dies ermöglicht ein besonderes sicheres Verriegeln von Formhälften.

Weiterhin kann die Blasform eine Einrichtung zur synchronen Drehung der beiden Wellen umfassen. Dies ermöglicht auf einfache Weise, dass die Aussparungen in den beiden Wellen z.B. gleichzeitig nach innen gedreht werden, damit sie sich gegenüberliegen und einen besonders großen Freiraum zur Durchführung des Verriegelungselementes schaffen, oder gleichzeitig nach außen gedreht werden, damit der Zwischenraum besonders weit eingeengt und damit die Verriegelungsposition eingenommen werden kann.

Um die mindestens eine Welle zu Drehen, ist an zumindest einem der Enden der Welle ein Zahnrad anzubringen. Über einen an sich bekannten Zahnradmechanismus kann dann ein Drehen der Wellen auf leichte Weise erreicht werden.

Bevorzugterweise ist dabei das Zahnrad so mit einer Zahnstange oder einem Zahnradelement in Eingriff zu bringen, dass durch Verschieben der Zahnstange oder durch Drehen des Zahnradelements das Zahnrad und dadurch die Welle um die durch die Welle verlaufende Längsachse drehbar ist. D.h., beispielsweise im Falle einer Zahnstange kann durch ein Hin- und Herbewegen derselben eine Drehbewegung der Wellen erzeugt werden.

Wenn beide Wellen im Eingriff mit derselben Zahnstange oder demselben Zahnradelement sind, kann z.B. die synchrone Drehung der beiden Wellen auf mechanische Weise bewirkt werden, ohne dass eine zusätzliche Elektronik oder dergl. zum Zeitabgleich der Drehbewegungen zwingend notwendig wäre.

Das Drehen der mindestens einen Welle lässt sich automatisieren, wenn ein Kontaktschalter vorgesehen wird, der im geschlossenen Zustand der Blasform in Kontakt mit einer Außenfläche des Verriegelungselementes kommt. In diesem Fall kann der Beginn der Verriegelung durch das Drehen der Welle(n) dann automatisch eingeleitet werden, wenn der Schalter gerade durch Berühren des Verriegelungselements geschlossen wird.

Ausführungsbeispiele der Erfindung werden im Folgenden mit Hilfe der beigefügten Zeichnungen näher beschrieben.

Dabei zeigt
- Figur 1: eine perspektivische Ansicht einer Blasform gemäß einer ersten Ausführungsform der Erfindung, die zwei schwenkbar gelagerte Formhälften mit zugehörigen Verriegelungs- bzw. Gegenelementen umfasst;
- Figur 2: eine perspektivische Detailansicht der Verriegelungsvorrichtung der Blasform nach Figur 1;
- Figur 3: eine schematische Querschnittsansicht der Verriegelungsvorrichtung der Blasform nach den Figuren 1 und 2 in einer Ebene senkrecht zur Längsachse der Wellen, wobei sich die Verriegelungsvorrichtung in einer Entriegelungsposition befindet;
- Figur 4: eine schematische Ansicht der Verriegelungsvorrichtung der Blasform nach den Figuren 1 und 2 in einer Ebene senkrecht zur Längsachse der Wellen, wobei sich die Verriegelungsvorrichtung in einer Verriegelungsposition befindet;
- Figur 5: eine schematische Ansicht von Details einer Blasform nach einer zweiten Ausführungsform;
- Figur 6: eine schematischen Querschnittsansicht einer Verriegelungsvorrichtung einer Blasform nach einem dritten Ausführungsbeispiel, die eine Entriegelungsposition senkrecht zur Längsachse der Welle darstellt; und
- Figur 7: die Verriegelungsvorrichtung nach Figur 6 in einer Verriegelungsposition.

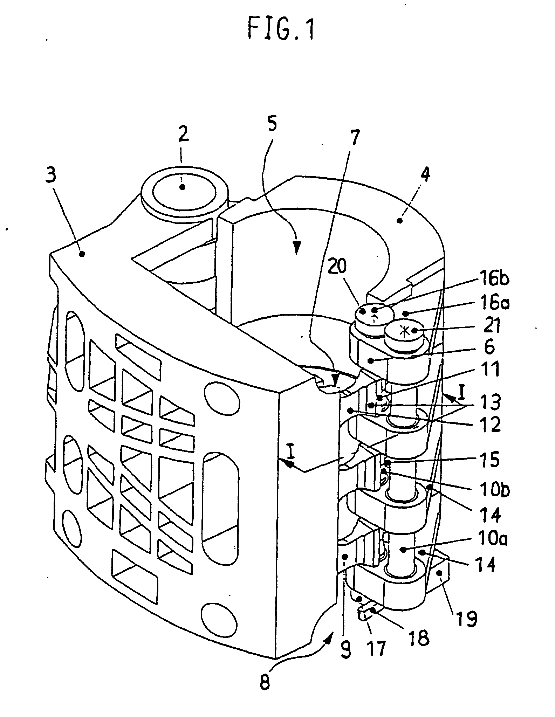

Eine erste Ausführungsform einer erfindungsgemäßen Blasform wird nachfolgend anhand der Figuren 1 bis 4 beschrieben.

Eine Blasform, die in einer an sich bekannten Streckblasmaschine verwendet wird, ist in der Figur 1 mit dem Bezugszeichen 1 gekennzeichnet. Die Blasform umfasst zwei um eine Verbindungsachse 2 drehbare, als Formträger dienende Formhälften, eine erste Formhälfte 3 und eine zweite Formhälfte 4. Die beiden Formhälften 3, 4 sind in an sich bekannter Weise so ausgestaltet, dass sie in einem verschlossenen Zustand einen inneren Hohlraum 5 bilden, in dem mittels nicht gezeigter Formeinsätze ein nicht dargestellter Vorformling in einem Streckblasprozess formgeblasen, d.h. auskonturiert werden kann.

Zum Verschließen der beiden Formhälften 3, 4 werden diese um die Verbindungsachse 2 so geschwenkt, dass die beiden seitlichen Flächen 6, 7 aneinander stoßen. In der Figur 1 ist dabei ein teilweise geöffneter, entriegelter Zustand der beiden Formhälften 3, 4 dargestellt.

Obwohl in der Figur 1 nicht dargestellt, umfasst die Blasform 1 neben den beiden Formhälften 3,4 mit ihren Formeinsätzen noch eine Bodenform und ggf. eine Deckelform. Diese Elemente wirken so zusammen, dass bei geschlossener Blasform im Inneren 5 ein für das Streckblasen ausreichend hoher Druck von beispielsweise 40 bar ausgeübt werden kann.

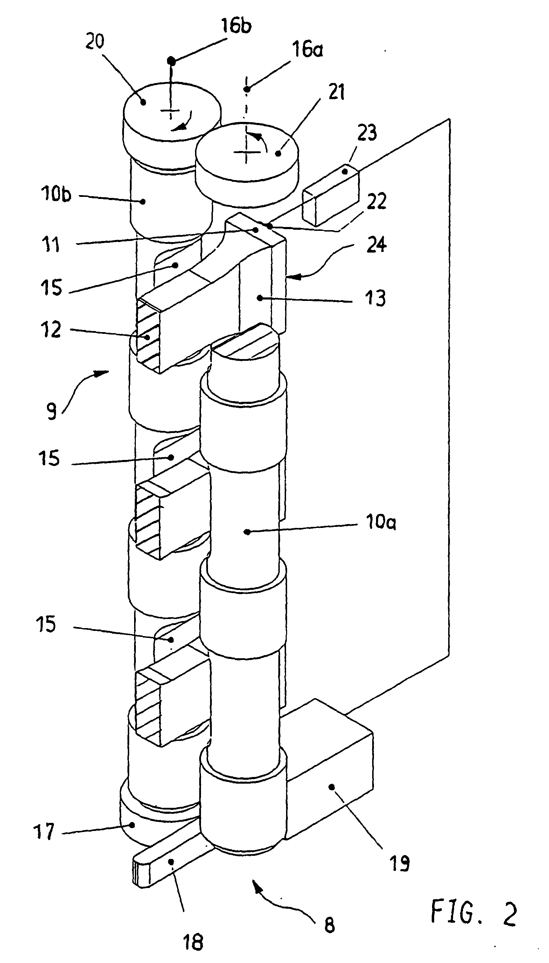

Aus der Figur 1 und insbesondere auch aus der Figur 2 sind Details der Verriegelungsvorrichtung 8 der Blasform 1 zu erkennen. Die Verriegelungsvorrichtung 8 umfasst dabei Verriegelungselemente 9 und Gegenelemente 10. Im Speziellen sind dabei drei entlang der Längsachse der Blasform 1, d.h. von oben nach unten beabstandet angeordnete einzelne Verriegelungselemente 9 an der Seitenfläche 7 der ersten Formhälfte 3 angeformt. Diese einzelnen Verriegelungselemente 9 stehen dabei horizontal von der Seitenwand 7 ab und haben in einer horizontalen Ebene etwa einen T-förmigen Querschnitt, wobei der Querbalken 11 dieses T-förmigen Verriegelungselementes 9 am von der Seitenfläche 7 entfernten Ende des Verriegelungselementes 9 angeformt ist und breiter als der Längsbalken 12 desselben ist. Am Übergang zwischen Querbalken 11 und Längsbalken 12 sind links und rechts jeweils außen abgerundete Bereiche 13 ausgeformt.

Im Bereich der Seitenfläche 6 der zweiten Formhälfte 4 sind zwei vertikal verlaufende Wellen 10a,b als Gegenelemente angebracht. Im Bereich der Seitenfläche 6 umfasst die Formhälfte 4 dabei einzelne vertikal beabstandete, nach außen horizontal vorspringende Bereiche 14. Bei der dargestellten Ausführungsform sind vier solcher Bereiche 14 vorhanden. In jedem dieser vorspringenden Bereiche 14 sind zwei Durchgangsöffnungen vorgesehen, durch die die Wellen 10a,b vertikal durchgesteckt und gelagert sind und zwar parallel zur Verbindungsachse 2 mit unterschiedlichen Abständen zu dieser.

Diese Durchgangsöffnungen und damit die darin gelagerten Wellen 10a, b sind dabei radial voneinander beabstandet angebracht. Die Wellen 10a, 10b sind an sich gleich ausgestaltet und haben eine längliche, im Wesentlichen zylinderförmige Gestalt. Im Bereich zwischen zwei vorspringenden Bereichen 14 haben die eingelagerten Wellen 10a, 10b jeweils Aussparungen 15 am Umfangsbereich, d.h., in diesem Bereich der Aussparungen 15 sind die Wellen 10a, 10b im Querschnitt nicht mehr zylinderförmig, sondern abgeflacht.

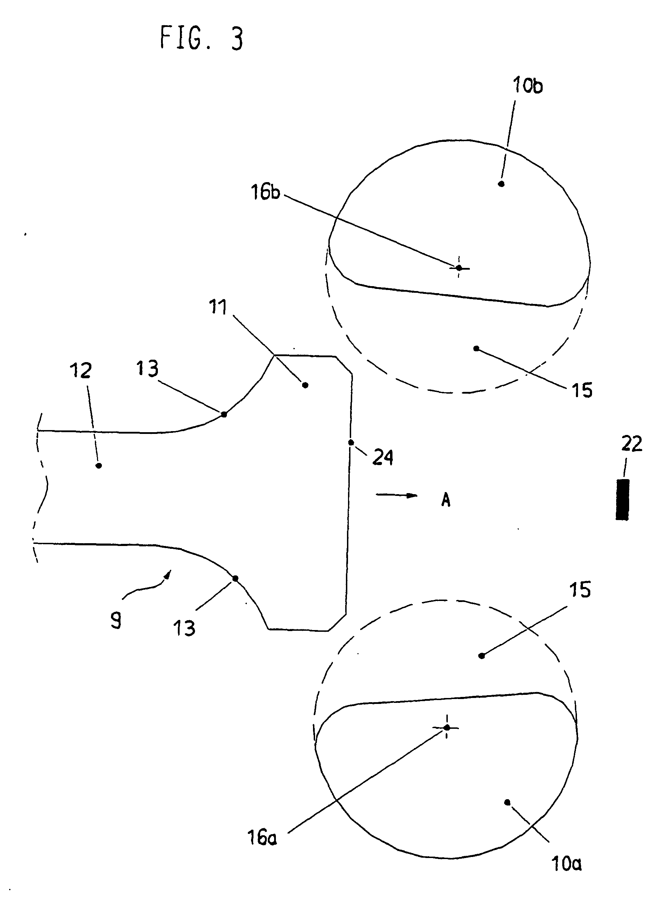

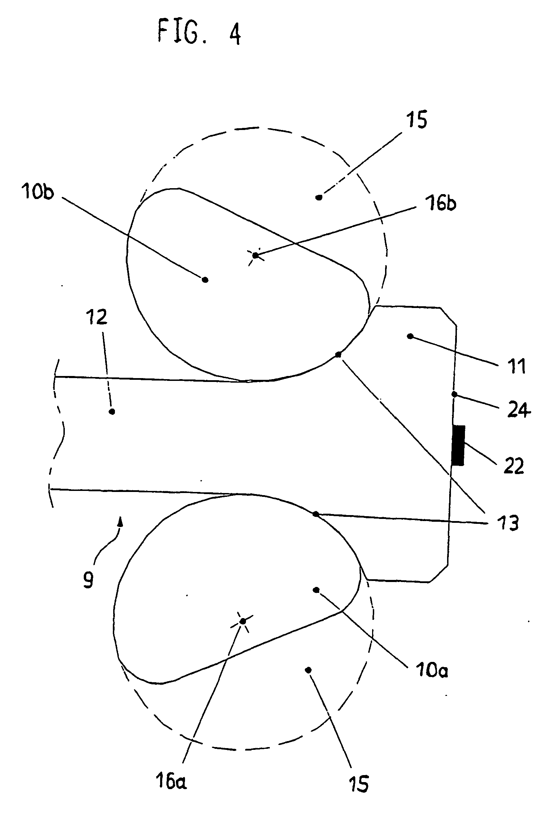

Die Ansichten der Figuren 3 und 4 zeigen Schnittebenen durch eines der Verriegelungselemente 9 und die beiden Wellen 10a, 10b in einer horizontalen Ebene entlang der Linie I-I nach der Figur 1. Die abgeflachte Form der beiden Wellen 10a, 10b im Bereich der Aussparungen 15, ist dabei durch die durchgezogene Linie dargestellt und die im Wesentlichen zylinderförmige Gestalt der beiden Wellen 10a, 10b in den Bereichen, in denen diese Aussparungen 15 nicht vorhanden sind, ist mit Hilfe der gestrichelten Linien veranschaulicht.

Die beiden Wellen 10a, 10b sind jeweils um eine durch die Querschnittsmitte verlaufende Längsachse 16a, b drehbar gelagert. Zur Drehung der Wellen 10a, 10b um ihre zugehörigen Drehachsen 16a bzw. 16b ist folgender Mechanismus vorgesehen.

Wie insbesondere in der Figur 2 zu erkennen ist, ist an der Unterseite der zweiten Welle 10b ein Zahnrad 17 angebracht, das den unteren Abschluss der Welle 10b bildet. Dieses Zahnrad 17 ist unmittelbar unterhalb des untersten der vier vorspringenden Bereiche 14 der Wandung der zweiten Formhälfte 4 angebracht und gelagert. Dieses Zahnrad 17 ist in Eingriff mit einer Zahnstange 18, die mit einer Ansteuerung 19 verbunden ist. Diese Ansteuerung 19 kann z.B. eine elektromechanische Einheit oder ein Pneumatikzylinder sein, in die hinein, bzw. aus der heraus die Zahnstange 18 ein- bzw. ausgefahren wird. Die Ansteuerung 19 kann somit eine Hin- und Herbewegung der Zahnstange 18 bewirken. Die Zahnstange 18 ist dabei so mit dem Zahnrad 17 in Eingriff, dass eine Hin- und Herbewegung der Zahnstange 18 zu einer Drehbewegung der in den vorspringenden Bereichen 14 eingelagerten zweiten Welle 10b um deren Längsachse 16b führt.

An dem dem Zahnrad 17 gegenüberliegenden Ende der Welle 10b ist oberhalb des obersten der vorspringenden Bereiche 14 ein zweites Zahnrad 20 angebracht, das wie das Zahnrad 17 mit der übrigen Welle 10b fest verbunden ist. Dieses zweite Zahnrad 20 wiederum ist in Eingriff mit einem dritten Zahnrad 21, das in etwa derselben horizontalen Ebene wie das zweite Zahnrad 20 am oberen Ende der anderen Welle 10a angebracht ist. Diese beiden Zahnräder 20, 21 greifen so ineinander, dass die Drehung des zweiten Zahnrades 20 zu einer Drehung des dritten Zahnrades 21 und damit zu einer Drehung der Welle 10a führt.

Der Mechanismus zur Drehung der beiden Wellen 10a, 10b ist also so ausgestaltet, dass durch ein Hin -und Herbewegen der Zahnstange 18 mittels der Zahnräder 17, 20, 21 die beiden Wellen 10a, 10b synchron drehbar sind und zwar mit entgegengesetztem Drehsinn. Es sei angemerkt, dass in der Figur 2 nur der besseren Anschaulichkeit halber der Bereich der Welle 10a unterhalb des dritten Zahnrades 21 nicht dargestellt ist, um die Struktur des Verriegelungselementes 9 in diesem Bereich besser veranschaulichen zu können.

Wie insbesondere anhand der nachfolgend noch genauer erläuterten Figur 4 zu erkennen ist, sind die abgerundeten Bereiche 13 der einzelnen Verriegelungselemente 9 so ausgeformt, dass sie in etwa der Außenkontur der Wellen 10a, 10b in dem Bereich entsprechen, bei dem am Umfangsbereich keine Aussparungen 15 vorhanden sind.

D.h., da die Wellen ansonsten etwa eine Zylinderform haben, entspricht der Krümmungsradius dieser abgerundeten Bereiche 13 in etwa dem Radius der Wellen 10a, 10b, so dass die Außenkontur der Wellen 10a, 10b in ihrem nicht abgeflachten Bereich eng an diesen abgerundeten Bereichen 13 des zugehörigen Verriegelungselementes 9 in der Verriegelungsposition nach Figur 4 anliegen kann.

Obwohl die Verriegelungselemente 9 nach der beschriebenen Ausführungsform im Wesentlichen eine T-förmige Gestalt und die Wellen 10a, 10b, von den Bereichen der Aussparungen 15 abgesehen, im Wesentlichen einen zylinderförmigen Querschnitt haben, ist die vorliegende Anmeldung nicht auf diese Formen beschränkt.

D.h., die Wellen 10a, 10b könnten auch irgendeine andere nicht zylinderförmige Gestalt, z.B. eine polygonale Querschnittsform haben, solange sie ausgesparte Bereiche enthalten, die ermöglichen, dass der zwischen den Aussparungen freigegebene Bereich etwas größer als die Breite des durch die beiden Wellen hindurchzuführenden Verriegelungselementes ist. Gleichzeitig müssen die Wellen dabei so ausgestaltet sein, dass in der Verrieglungsposition, in denen die Aussparungen nicht aufeinander zuweisen, der Durchgang zwischen den beiden Wellen 10a, 10b nur so breit ist, dass der breite Bereich 11 der Verriegelungselemente 9 nicht durch diesen Zwischenraum hindurchgeführt werden kann.

Die Verriegelungsvorrichtung 8 umfasst weiterhin einen Kontaktschalter 22, der im Bereich eines der horizontal beabstandeten Verriegelungselemente 9, im angegebenen Beispiel des obersten der drei Verrieglungselemente, angebracht ist. Dieser Kontaktschalter 22 ist dabei so an der zweiten Formhälfte 4 befestigt, dass die vordere seitliche Außenfläche im Bereich des querbalkenförmigen Teils 11 des Verriegelungselementes 9 in Kontakt mit diesem Kontaktschalter 22 kommt, wie es in der Figur 2 dargestellt ist, wenn die beiden Formhälften geschlossen werden. Es ist weiterhin eine mit diesem Kontaktschalter 22 und der Ansteuerung 19 der Zahnstange 18 verbundene Steuerungseinheit 23 vorhanden, die im Falle des Kontaktes des Kontaktschalters 22 mit dem Verriegelungselement 9 die Zahnstange 18 soweit ausfährt, dass die beiden Wellen 10a, b in ihre Verriegelungsposition gedreht werden.

Die Blasform nach der ersten Ausführungsform wird nun wie folgt verwendet:

In einem geöffneten Zustand der Blasform sind die beiden Wellen in die in der Figur 3 dargestellte Position gedreht, bei der die Aussparungen 15 aufeinander zuweisen, so dass der Zwischenraum zwischen den beiden Wellen 10a, 10b soweit vergrößert ist, dass die Breitseite, d.h., der Bereich 11 des Verriegelungselementes 9, der ähnlich einem Querbalken des T ist, durch den Zwischenraum hindurchgeführt werden kann.

Nun wird ein Vorformling von oben her in den Hohlraum 5 zwischen die nicht gezeigten Formeinsätze gebracht und anschließend eine nicht dargestellte Bodenform und eine evtl. zu verwendende Deckelform zur Verschließung der Unter- bzw. Oberseite der Blasform hoch- bzw. heruntergefahren und es werden die beiden Formhälften 3, 4 um ihre Verbindungsachse 2 aufeinander zu geschwenkt, bis die Seitenflächen 6, 7 in Kontakt miteinander kommen. Dabei werden die einzelnen Verriegelungselement 9 etwa in Richtung A, wie in der Figur 3 dargestellt, bewegt.

Die gesteuerte Schwenkbewegung der beiden Formhälften 3, 4 erfolgt solange, bis die Vorderseite 24 eines der Verriegelungselemente 9 mit dem Kontaktschalter 22 in Berührung kommt.

In diesem Fall, der in der Figur 4 veranschaulicht ist, wird über die Steuerungseinheit 23 mittels der Ansteuerung 19 die Zahnstange 18 ausgefahren, so dass dadurch das mit der Zahnstange in Eingriff befindliche Ritzel 17 gedreht wird. Mit der Drehung des Ritzels 17 dreht sich auch das am anderen Ende der Welle 10b befestigte zweite Zahnrad 20 und damit synchron das dritte Zahnrad 21 an der anderen Welle 10a. Somit werden durch ein Ausfahren der Zahnstange 18 beide Wellen 10a, 10b gleichzeitig gedreht.

Dabei fährt die Ansteuerung 19 die Zahnstange 18 soweit aus, dass die beiden Wellen 10a, 10b in die in der Figur 4 dargestellte Verriegelungsposition gedreht werden. In diesem Zustand liegen Bereiche der zylinderförmigen Außenkontur der Wellen 10a, 10b, d.h., Bereiche, in denen die Aussparungen 15 nicht vorhanden sind, an den abgerundeten Bereichen 13 der Verriegelungselemente 9 an. Dieses Anliegen führt dazu, dass das Verriegelungselement 9 bezüglich der als Gegenelemente fungierenden Wellen 10a, 10b verriegelt ist und nicht in die in Figur 3 dargestellte Entriegelungsposition zurückgeschoben werden kann.

Wenn die Blasform 1 auf diese Weise verriegelt wurde, kann in einer an sich bekannten Weise der Streckblasprozess ausgeführt werden. D.h., bei Temperaturen von 90 bis 100° C wird der Vorformling zur Flasche geblasen, indem der Vorformling zunächst in dem verriegelten Hohlraum 5 mit einer kurvengesteuerten Reckstange angereckt und zeitlich verzögert dann die Flasche mit dem Vorblasdruck (12 bis 25 bar) beaufschlagt wird. Abschließend wird die Flasche dann mit dem Fertigblasdruck von etwa 40 bar auskonturiert und in der Blasform 5 abgekühlt.

Nach der Druckentlastung und Abkühlung, d.h., nach dem der Druck im Inneren der Blasform von einem gegebenen hohen Wert auf einen niedrigeren Wert abfällt, kann die Ansteuerung 19 einen Steuerungsimpuls erhalten, so dass sie automatisch die Zahnstange 18 wieder einfährt, bis die beiden Wellen 10a, 10b aus der in der Figur 4 dargestellten Verriegelungsposition wieder in die in der Figur 3 dargestellte Entriegelungsposition gedreht sind. Anschließend kann die Blasform 1 durch Schwenken der beiden Formhälften 3, 4 um die Verbindungsachse 2 vollständig geöffnet werden und die Flasche entnommen und einem Transportsystem zugeführt werden.

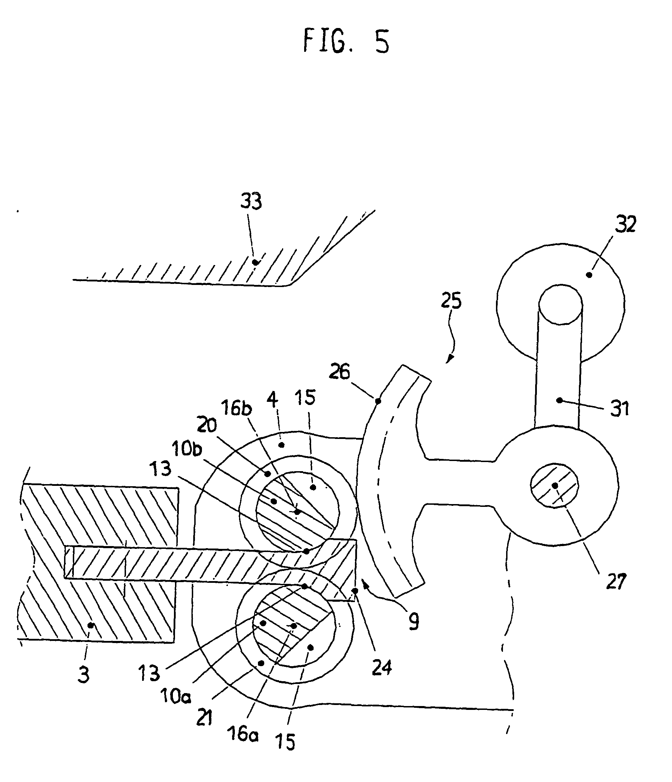

Details einer zweiten Ausführungsform der vorliegenden Erfindung sind in der Figur 5 veranschaulicht. Der Aufbau und die Funktionsweise dieser Blasform entsprechen im Wesentlichen der der Figuren 1 bis 4. Gleiche Bauelemente wie bei der ersten Ausführungsform werden mit den selben Bezugszeichen gekennzeichnet. Die schematische Ansicht von oben verdeutlicht eine Verriegelungsposition, in der die beiden Formhälften 3, 4 verschlossen sind. Dabei ist, ähnlich wie bei der Figur 4, die Verriegelungsvorrichtung in der Verriegelungsposition. D.h., das Verriegelungselement 9 ist mit seinem Vorderbereich durch den Zwischenraum zwischen den beiden Wellen 10a, 10b hindurchgeschoben und diese so verdreht, dass ein Teil ihrer Außenkonturen an den abgerundeten Bereichen 13 des Verriegelungselementes 9 anliegt.

Die zweite Ausführungsform unterscheidet sich von der ersten insbesondere dadurch, dass der Mechanismus zur Drehung der beiden Wellen ein anderer ist. Während bei der ersten Ausführungsform eine hin- und herbewegbare Zahnstange 18 zur synchronen Drehung der Wellen 10a, 10b verwendet wird, ist dafür bei der zweiten Ausführungsform ein Zahnsegment 25 vorgesehen.

Dieses Zahnsegment 25 hat eine verzahnte Außenkontur 26, die in Eingriff mit dem am oberen Ende der Welle 10b befestigten Zahnrad 20 ist. Das Zahnsegment 25 ist über einen Arm um eine Achse 27 schwenkbar, so dass die Drehung der Außenkontur 26 zu einer Drehung des zweiten Zahnrades 20 und damit der einen Welle 10b und durch den Eingriff des zweiten Zahnrades 20 mit dem dritten Zahnrad 21 zu einer synchronen Drehung der mit dem dritten Zahnrad 21 verbundenen anderen Welle 10a führt. Das Zahnsegment 25 ist starr mit einem Hebel 31 verbunden, an dem eine Kurvenrolle 32 drehbar gelagert ist. Diese arbeitet mit einer Steuerkurve 33 zusammen, die stationär zu der auf einer Kreisbahn umlaufenden Blasform angeordnet ist und an definierten Stellen der Umlaufbahn die Verriegelungsvorrichtung öffnet bzw. schließt.

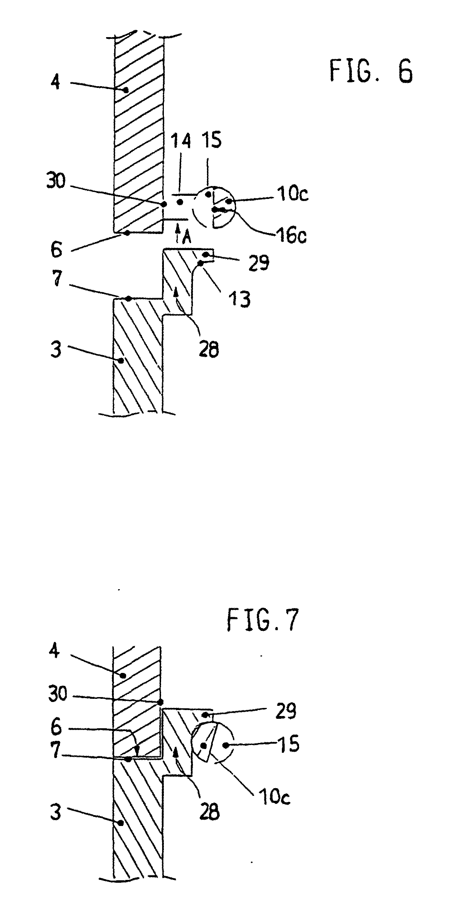

Details einer dritten Ausführungsform der vorliegenden Erfindung sind in den Figuren 6 und 7 gezeigt. Gleiche Bauteile werden wiederum mit denselben Bezugszeichen gekennzeichnet. Die Blasform nach diesem dritten Ausführungsbeispiel unterscheidet sich von den beiden vorhergehenden durch die Ausgestaltung der Verriegelungsvorrichtung.

Wie in der Figur 6 zu erkennen ist, ist bei dieser Ausführungsform nur eine Welle 10c als Gegenelement vorhanden und nicht zwei wie bei den beiden anderen Ausführungsformen.

Diese einzelne Welle 10c kann dabei, ähnlich wie die Welle 10a bei der ersten und zweiten Ausführungsform, in den einzelnen vorspringenden Bereichen 14 der zweiten Formhälfte 4 drehbar gelagert sein. Das Verriegelungselement 9 ist hierbei an der Stirnfläche 7 der ersten Formhälfte 3 seitlich im Wesentlichen durch die Form eines L gebildet. Der Längsbalken dieses L-förmigen Verriegelungselementes 28 ist dabei so ausgestaltet, dass er im Bereich zwischen der Drehwelle 10c und der Wandung 30 der zweiten Formhälfte 4 an dieser Wandung 30 anliegend zwischen zwei vertikal beabstandeten vorspringenden Bereichen 14 hindurchgeführt werden kann, wenn die Welle 10c in die Entriegelungsposition gedreht ist.

Diese Entriegelungsposition, die in der Figur 6 dargestellt ist, ist dadurch gekennzeichnet, dass die Aussparung 15 an der Welle 10c nach innen zur Wandung 30 der Formhälfte 4 hin gerichtet ist, so dass der Breitenbereich 29, d.h. der Querbalken des L-förmigen Verriegelungselementes 28 zwischen Wandung 30 und Welle 10c hindurchgeführt werden kann. Wenn die beiden Formhälften 3, 4 vollständig verschlossen sind, indem, wie es in der Figur 7 dargestellt ist, die beiden Stirnflächen 6 und 7 in Kontakt kommen, ist bereits der breite vordere Bereich 29 des Verriegelungselementes 28 an der Welle 10c vorbeigeführt worden.

Ähnlich wie bei den ersten beiden Ausführungsformen kann auch in diesem Fall automatisch, evtl. durch einen Schrittmotor angetrieben, die Welle 10c um ihre Längsachse 16c von der in der Figur 6 dargestellten Entriegelungsposition in die in der Figur 7 dargestellte Verriegelungsposition gedreht werden, bei der der Bereich der Außenkontur der Welle 10c, der keine Aussparung 15 hat, teilweise an dem abgerundeten Bereich 13 zwischen Quer- und Längsbalken des L-förmigen Verriegelungselementes 28 anliegt und dadurch ein Zurückschieben des Verriegelungselementes 28 und damit der Formhälfte 3 verhindert.

Die erfindungsgemäßen Blasformen ermöglichen somit eine Verriegelung auf konstruktiv besonders einfache Weise, wobei aufgrund des geringen Trägheitsmoments der zu verdrehenden Wellen 10 ein extrem schnelles Ver- und Entriegeln mit geringen Betätigungskräften möglich ist.

## Patentansprüche

1. Blasform (1) mit zwei um eine Verbindungsachse (2) schwenkbaren Formhälften (3, 4) für eine Streckblasmaschine oder dergl., die mindestens ein an einer ersten Formhälfte (3) angebrachtes Verriegelungselement (9, 28) und mindestens ein an einer zweiten Formhälfte (4) angebrachtes Gegenelement (10a,b,c) umfasst, **dadurch gekennzeichnet, dass** das Gegenelement (10a,b,c) eine parallel zur Verbindungsachse (2) angeordnete Welle (10a,b,c) ist, die durch Drehung um eine durch die Welle verlaufende Längsachse (16a,b,c) zwischen einer Verriegelungsposition, in der die Blasform (1) verriegelt ist, und einer Entriegelungsposition drehbar ist, in der die Blasform (1) geöffnet werden kann und die Welle (10a,b,c) eine solche Außenkontur hat, dass die Welle (10a,b,c) in der Verriegelungsposition zumindest teilweise an dem Verriegelungselement (9, 28) anliegt und in der Entriegelungsposition das Verriegelungselement (9, 28) freigibt.

2. Blasform nach Anspruch 1, **dadurch gekennzeichnet, dass** die Welle (10a,b,c) mindestens eine Aussparung (15) am Umfangsbereich hat, an der das Verriegelungselement (9, 28) zum Öffnen der Blasform (1) zumindest teilweise vorbeibewegbar ist.

3. Blasform nach zumindest einem der vorhergehenden Ansprüche, **dadurch gekennzeichnet, dass** an der zweiten Formhälfte (4) zwei Wellen (10a,b) angebracht sind, die jeweils um eine durch sie verlaufende Längsachse (16a,b) zwischen der Verriegelungsposition und der Entriegelungsposition drehbar sind.

4. Blasform nach Anspruch 3, **dadurch gekennzeichnet, dass** die beiden Wellen (10a,b) so beabstandet voneinander angebracht sind, dass in der Entriegelungsposition das Verriegelungselement (9) zwischen den beiden Wellen (10a,b) zumindest teilweise hindurchgeführt werden kann und in der Verriegelungsposition die Konturen der beiden Wellen (10a,b) zumindest teilweise so an dem Verriegelungselement (9) anliegen, dass die Blasform fest verriegelt ist.

5. Blasform nach Anspruch 3 oder 4, **dadurch gekennzeichnet, dass** das Verriegelungselement (9) im wesentlichen eine T- förmige Gestalt hat.

6. Blasform nach zumindest einem der vorhergehenden Ansprüche 3 bis 5, **gekennzeichnet durch** eine Einrichtung (17-23) zur synchronen Drehung der beiden Wellen (10a,b).

7. Blasform nach zumindest einem der vorhergehenden Ansprüche, **dadurch gekennzeichnet, dass** an zumindest einem der Enden der zumindest einen Welle (10a,b,c) ein Zahnrad (17) angebracht ist.

8. Blasform nach Anspruch 7, **dadurch gekennzeichnet, dass** das Zahnrad (17) so mit einer Zahnstange (18) oder einem Zahnradelement (25) im Eingriff ist, dass durch Verschieben der Zahnstange (18) oder durch Drehen des Zahnradelements (25) das Zahnrad (17) und **dadurch** die Welle (10a,b,c) um die durch die Welle (10a,b,c) verlaufende Längsachse (16a,b,c) drehbar ist.

9. Blasform nach zumindest einem der vorhergehenden Ansprüche, **gekennzeichnet durch** einen Kontaktschalter (22), der im geschlossenen Zustand der Blasform (1) in Kontakt mit einer Außenfläche (24) des Verriegelungselementes (9, 28) kommt.

10. Blasform nach Anspruch 3, **dadurch gekennzeichnet, dass** die zwei Wellen (10a, 10b) unterschiedlich weit zur Verbindungsachse (2) beabstandet sind.

11. Blasmaschine, insb. zum Streckblasen von Vorformlingen, die mindestens eine Blasform (1) nach zumindest einem der vorherigen Ansprüche umfasst.

## Claims

1. A blowing mould (1) comprising two mould halves (3, 4) which can swivel about a connecting axis (2) for a stretch-blowing machine or the like, which comprises at least one locking element (9, 28) mounted on a first mould half (3) and at least one counter-element (10a, b, c) mounted on a second mould half (4), **characterised in that** the counter-element (10a, b, c) is a shaft (10a, b, c)disposed parallel to the connecting axis (2) which by rotation about die longitudinal axis (16a, b, c) extending through the shaft between a locking position in which the blowing mould (1) is locked and an unlocking position in which the blowing mould (1) can be opened and the shaft (10a, b, c) has an external contour such that in the locking position the shaft (10a, b, c) is seated at least in part against the locking element (9, 28) and in the unlocked position it releases the locking element (9, 28).

2. A blowing mould according to claim 1, **characterised in that** the shaft (10a, b, c) has at least one recess (15) in its peripheral region, past which the locking element (9, 28) can be moved at least in part, for opening the blowing mould.

3. A blowing mould according to at least one of the preceding claims, **characterised in that** two shafts (10a, b) are mounted on the second mould half (4), each of which can be rotated through a longitudinal axis (16a, b) passing through it between the locking position and the unlocking position.

4. A blowing mould according to claim 3, **characterised in that** the two shafts (10a, b) are mounted spaced apart from each other so that in the unlocking position the locking element (9) can be passed at least partially between the two shafts (10a, b) and in the locking position the contours of the two shafts (10a, b) are seated at least in part against the locking element (10) so that the blowing mould is securely locked.

5. A blowing mould according to claim 3 or 4, **characterised in that** the locking element (9) is substantially T-shaped in form.

6. A blowing mould according to at least one of the preceding claims 3 to 5, **characterised by** a device (17-23) for the synchronous rotation of the two shafts (10a, b).

7. A blowing mould according to at least one of the preceding claims, **characterised in that** a gearwheel (17) is mounted at at least one of the ends of the at least one shaft (10a, b, c).

8. A blowing mould according to claim 7, **characterised in that** the gearwheel (17) is in engagement with a rack (18) or gearwheel element (25) so that by displacing the rack (18) or by rotating the gearwheel element (25) the gearwheel (17) and thereby the shaft (10a, b, c) can be rotated about the longitudinal axis (16a, b, c) passing through the shaft (10a, b, c).

9. A blowing mould according to at least one of the preceding claims, **characterised by** a contact switch (22) which in the closed state of the blowing mould (1) comes into contact with an outer face (24) of the locking element (9, 28).

10. A blowing mould according to claim 3, **characterised in that** the two shafts (10a, 10b) are spaced from the connecting axis (2) by different extents.

11. A blowing mould, particularly for the stretch blow moulding of preforms, which comprises at least one blowing mould (1) according to at least one of the preceding claims.

## Revendications

1. Moule de soufflage (1) comprenant deux demi-moules (3, 4) pivotant autour d'un axe de liaison (2) pour une machine d'étirage-soufflage ou analogue qui comprend au moins un élément de verrouillage (9, 28) placé sur un premier demi-moule (3) et au moins un élément opposé (10a, b, c) placé sur un second demi-moule (4),
**caractérisé en ce que**
l'élément opposé (10a, b, c) est un arbre (10a, b, c) disposé parallèlement à l'axe de liaison (2) qui peut pivoter par rotation autour d'un axe longitudinal (16a, b, c) s'étendant à travers l'arbre entre une position de verrouillage, dans laquelle le moule de soufflage (1) est verrouillé, et une position de déverrouillage, dans laquelle le moule de soufflage (1) peut être ouvert et l'arbre (10a, b, c) présente un tel contour extérieur que l'arbre (10a, b, c) prend appui au moins en partie contre l'élément de verrouillage (9, 28) dans la position de verrouillage et libère l'élément de verrouillage (9, 28) dans la position de déverrouillage.

2. Moule de soufflage selon la revendication 1,
**caractérisé en ce que**
l'arbre (10a, b, c) présente au niveau de la périphérie au moins un évidement (15), au voisinage duquel l'élément de verrouillage (9, 28) peut être déplacé au moins en partie pour ouvrir le moule de soufflage (1).

3. Moule de soufflage selon au moins l'une quelconque des revendications précédentes,
**caractérisé en ce que**
sur le second demi-moule (4) deux arbres (10a, b) peuvent être respectivement pivotés autour d'un axe longitudinal (16a, b) s'étendant à travers eux entre la position de verrouillage et la position de déverrouillage.

4. Moule de soufflage selon la revendication 3,
**caractérisé en ce que**
les deux arbres (10a, b) sont à une distance telle l'un de l'autre, que dans la position de déverrouillage, l'élément de verrouillage (9) peut être passé au moins en partie entre les deux arbres (10a, b) et dans la position de verrouillage, les contours extérieurs des deux arbres (10a, b) prennent appui au moins en partie contre l'élément de verrouillage (9) de telle manière que le moule de soufflage est solidement verrouillé.

5. Moule de soufflage selon la revendication 3 ou 4,
**caractérisé en ce que**
l'élément de verrouillage (9) a une forme sensiblement en T.

6. Moule de soufflage selon au moins l'une quelconque des revendications précédentes 3 à 5,
**caractérisé par**
une installation (17-23) pour la rotation synchrone des deux arbres (10a, b).

7. Moule de soufflage selon au moins l'une quelconque des revendications précédentes,
**caractérisé en ce qu'**
une roue dentée (17) est placée sur au moins l'une des extrémités d'au moins un arbre (10a, b, c).

8. Moule de soufflage selon la revendication 7,
**caractérisé en ce que**
la roue dentée (17) est en prise avec une crémaillère (18) ou un élément de la roue dentée (25) de sorte qu'en déplaçant la crémaillère (18) ou en faisant tourner l'élément de la roue dentée (25), la roue dentée (17) et ainsi l'arbre (10a, b, c) puissent pivoter autour de l'axe longitudinal (16a, b, c) s'étendant à travers l'arbre (10a, b, c).

9. Moule de soufflage selon au moins l'une quelconque des revendications précédentes,
**caractérisé en ce qu'**
un commutateur de contact (22) entre en contact avec une surface extérieure (24) de l'élément de verrouillage (9, 28) lorsque le moule de soufflage (1) est à l'état fermé.

10. Moule de soufflage selon la revendication 3,
**caractérisé en ce que**
les deux arbres (10a, 10b) sont à une distance différente de l'axe de liaison (2).

11. Appareil de soufflage, en particulier, pour l'étirage-soufflage de préformes, comprenant au moins un moule de soufflage (1) selon au moins l'une quelconque des revendications précédentes.
